# EUROPÄISCHE PATENTSCHRIFT

(11) **EP 0 497 209 B1**
(45) Veröffentlichungstag und Bekanntmachung des Hinweises auf die Patenterteilung: **30.03.1994**
(21) Anmeldenummer: 92101066.6
(22) Anmeldetag: 23.01.1992
(51) Int. Cl.: B62D 29/00, B62D 29/04

(54) **Gegossenes Fahrzeug-Aufbauteil**
Cast vehicle construction element
Elément de construction de véhicule coulé

(30) Priorität: 01.02.1991 DE 4103036
(43) Veröffentlichungstag der Anmeldung: 05.08.1992
(73) Patentinhaber: Bayerische Motoren Werke Aktiengesellschaft, 80788 München (DE)
(72) Erfinder: Weiser, Klaus, W-8082 Grafrath (DE); Kirchner, Günter, W-8911 Hofstetten (DE)

(56) Entgegenhaltungen:
- EP-A- 0 119 131
- EP-A- 0 370 342
- DE-A- 3 038 824
- DE-B- 1 115 993
- FR-A- 1 127 388
- US-A- 3 068 043
- US-A- 4 791 765

## Beschreibung

Die Erfindung betrifft ein gegossenes Fahrzeug-Aufbauteil, aus einer Leichtmetall-Legierung, insbesondere hergestellt in einem Druckguß-Verfahren. Unter den Begriff des Aufbauteiles sollen dabei neben Fahrzeugwänden, Rahmen, Säulen und Trägern auch Klappen und Türen fallen.

Die Verwendung von Leichtmetall-Gußteilen für Fahrzeug-Aufbauten ist bekannt. So beschreibt beispielsweise die DE-Zeitschrift "Aluminium" 28 (1952), Heft 4, Seite 107, eine gegossene Spritzwand. In der DE-Zeitschrift "Ingenieur-Werkstoffe" 2 (1990) Nr. 3, Seite 43, findet sich der Hinweis, den Windfang eines Fahrzeuges in dünnwandigen Druckgußteilen auszubilden. Verbunden sind diese bekannten Aufbauteile mit anderen Fahrzeugteilen üblicherweise durch Schraubverbindungen. Derartige Schraubverbindungen sind jedoch aufwendig. Bekannt sind darüber hinaus auch andere Verbindungstechniken an gegossenen Aluminium-Bauteilen. So können beispielsweise Stahleinlegeteile in Aluminiumguß eingegossen werden. Ein besonders zuverlässiges bekanntes Verfahren ist dabei das Al-Fin-Verfahren.

Die bekannten gegossenen Fahrzeug-Aufbauteile sind für den direkten Einsatz als Fahrzeug-Außenhautteile ungeeignet, da die Oberflächenqualität üblicher Stahlblech-Außenhautteile mit gegossenen Aufbauteilen, beispielsweise aus einer Leichtmetall-Legierung oder aus geeigneten Kunststoffen, die mit Kohlefasern oder Glasfieberfasern verstärkt sein können, nicht erreicht wird. Zu dieser Problematik ist als Stand der Technik die DE 32 04 526 A1 zu nennen. Diese Schrift beschreibt eine Fahrzeugrahmenstruktur aus leichtmetallischen Strangpreß-profilen, die mit einem angespritzten Kunststoff-Verkleidungsteil versehen ist. Hiermit läßt sich jedoch lediglich eine Kunststoff-Außenhaut erzielen.

Aufgabe der Erfindung ist es daher, ein verbessertes Fahrzeug-Aufbauteil nach dem Oberbegriff des Anspruchs 1 aufzuzeigen.
Gelöst wird diese Aufgabe durch eine angegossene oder eingegossene Stahlblech-Struktur, die die Fahrzeug-Außenhaut des Aufbauteiles und/oder einen Flansch für die Verbindung mit einem weiteren Fahrzeug-Teil bildet.

Erfindungsgemäß ist das gegossene Aufbauteil mit einer durch den Gießprozeß eingebundenen bzw. angebundenen Stahlblech-Struktur versehen. Ein derartiges Verbund-Aufbauteil läßt sich somit relativ einfach fertigen. Einerseits kann ein derartiges Verbund-Aufbauteil so eingesetzt werden, daß die Stahlblech-Struktur die FahrzeugAußenhaut bildet. Auf diese Weise kann eine gegenüber reinen Aluminium-Bauteilen wesentlich höhere Oberflächenqualität erzielt werden. Ein anderer Anwendungsfall liegt vor, wenn die Stahlblechstruktur einen Flansch für die Verbindung mit einem weiteren Fahrzeugteil bildet. Dieser Stahlblechflansch kann mit anderen Fahrzeugteilen durch gängige und leicht beherrschbare Verbindungstechniken verbunden, beispielsweise verschweißt werden, die nicht so ohne weiteres auf Aluminiumbauteile übertragbar sind.

Im erstgenannten Fall besitzt somit das Aufbauteil die gleiche Oberfläche wie die üblichen Stahlblech-Aufbauteile, im zweiten Fall kann das Aufbauteil über den Stahlblech-Flansch mit anderen Fahrzeug-Teilen beispielsweise verschweißt werden. Es ist jedoch auch möglich, den Flansch mit einer Gewindebohrung zu versehen oder andere Verbindungstechniken vorzusehen.

Bevorzugt wird ein erfindungsgemäßes Fahrzeug-Aufbauteil in einem Vakuum-Druckgußverfahren gefertigt. Bei dünnsten Wandstärken und somit bei optimiertem Gewicht gewährleistet dies beste Ergebnisse. Insbesondere ist es auch möglich, gezielt Hohlräume im Aufbauteil vorzusehen. Derart gebildete Hohlprofile können dabei wieder durch die eingegossene Stahlblech-Struktur verstärkt sein.

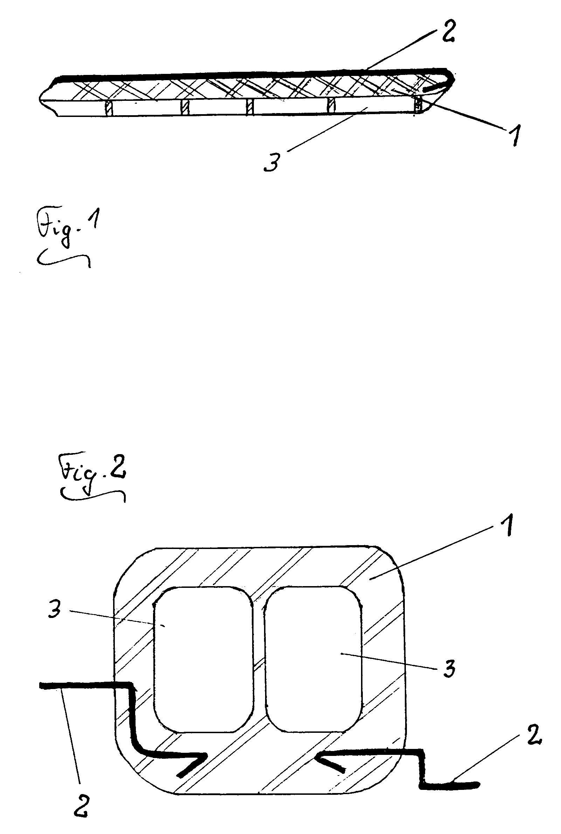

Zwei lediglich prinzipiell dargestellte Ausführungsbeispiele dienen der näheren Erläuterung der Erfindung. Während Fig. 1 ein die Fahrzeug-Außenhaut bildendes Aufbauteil zeigt, ist in Fig. 2 ein Aufbauteil mit Stahlblech-Flanschen dargestellt.

Die beiden im Schnitt gezeigten Aufbauteile bestehen aus einer in einem Vakuum-Druckgußverfahren hergestellten Struktur 1 beispielsweise aus einem Leichtmetall, in die eine Stahlblech-Struktur 2 angegossen bzw. eingegossen ist. Verbundgußtechniken zur Herstellung derartiger Verbundteile sind bekannt. Zur gegenseitigen Sicherung sind die beiden Strukturen 1, 2 entsprechend ausgebildet, d. h. insbesondere mit entsprechenden Hinterschnitten, Abwinkelungen etc. versehen.

Beim Ausführungsbeispiel nach Fig. 1 bildet die Stahlblech-Struktur 2 die Außenhaut des Fahrzeuges, an dem dieses Aufbauteil verbaut wird. Beim Ausführungsbeispiel nach Fig. 2 dient die Stahlblech-Struktur dazu, das Aufbauteil mit anderen Fahrzeugteilen zu verbinden. Hierzu ist die Stahlblech-Struktur flanschartig ausgebildet, so daß beispielsweise eine einfache Schweißverbindung mit anderen Fahrzeugteilen möglich ist.

Unter anderem zur Gewichtsreduzierung sind bei beiden Ausführungsbeispielen Hohlräume 3 vorgesehen. Die Fertigung durch das Vakuum-Druckgußverfahren gewährleistet, daß diese Aufbauteile auch bei geringen Wandstärken fehlerfrei hergestellt werden können. Einsatz finden können derartige Aufbauteile für die unterschiedlichsten Anwendungsfälle. Denkbar ist beispielsweise bei Türen und Klappen, daß ein vakuum-unterdruckgegossenes Innenblech in einer Folge an die Fahrzeug-Außenhaut angegossen wird. Es ist aber auch möglich, die Bodengruppe des Fahrzeuges in einem Stück oder in mehreren Stücken zu fertigen und diese dann mittels der Stahlblech-Strukturen miteinander zu verbinden. Stets stellt ein erfindungsgemäßes Fahrzeug-Aufbauteil eine vorteilhafte Kombination von Stahlblech und einem Leichtbau-Werkstoff dar. Neben Leichtmetall-Legierungen können als Leichtbau-Werkstoff auch geeignete Kunststoffe, beispielsweise verstärkt durch Kohlefasern oder Glasfiber, zum Einsatz kommen. Aufgrund der Gießtechnik können Materialdicken entsprechend den Anforderungen gewählt werden, Versteifungen beispielsweise unter Zuhilfenahme der Stahlblech-Struktur sind in beliebiger Weise möglich. Vorteilhafterweise sind an einem erfindungsgemäßen Fahrzeug-Aufbauteil weniger aufwendige Korrosionsschutzmaßnahmen erforderlich.

## Patentansprüche

1. Gegossenes Fahrzeug-Aufbauteil aus einer Leichtmetall-Legierung, insbesondere hergestellt in einem Druckguß-Verfahren, gekennzeichnet durch eine angegossene oder eingegossene Stahlblech-Struktur (2), die die Fahrzeug-Außenhaut des Aufbauteiles und/oder einen Flansch für die Verbindung mit einem weiteren Fahrzeug-Teil bildet.

2. Aufbauteil nach Anspruch 1,
dadurch gekennzeichnet, daß zumindest im Gußteil ein Hohlraum (3) vorgesehen ist.

## Claims

1. A cast vehicle construction part of a light metal alloy, especially one manufactured by a diecasting process, characterised by a sheet steel structure (2) which is integrated in or on the cast part during casting and which forms the vehicle skin of the construction part and/or a flange for connection to a further vehicle part.

2. A construction part according to claim 1,
characterised in that at least one hollow region (3) is provided in the cast part.

## Revendications

1. Elément coulé de construction de véhicule en un alliage de métaux légers, fabriqué en particulier selon un procédé de coulée sous pression, élément de construction caractérisé par une structure en tôle d'acier (2) coulée ou venue de fonderie, qui forme le revêtement extérieur de véhicule de l'élément de construction et/ou une bride pour la liaison avec une autre partie du véhicule.

2. Elément de construction selon la revendication 1, caractérisé en ce que l'on prévoit au moins un espace creux (3) dans la pièce coulée.
